(19) Europäisches Patentamt / European Patent Office / Office européen des brevets

(11) **EP 4 564 377 A1**

(12) **EUROPEAN PATENT APPLICATION**
published in accordance with Art. 153(4) EPC

(43) Date of publication:
04.06.2025 Bulletin 2025/23

(21) Application number: 23846481.2

(22) Date of filing: 24.07.2023

(51) International Patent Classification (IPC):
$H01C\ 7/00$ (2006.01)  $C01G\ 55/00$ (2006.01)
$C03C\ 8/16$ (2006.01)  $C03C\ 14/00$ (2006.01)

(52) Cooperative Patent Classification (CPC):
C01G 55/00; C03C 8/16; C03C 14/00; H01C 7/00

(86) International application number:
PCT/JP2023/027071

(87) International publication number:
WO 2024/024751 (01.02.2024 Gazette 2024/05)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 27.07.2022 JP 2022119727

(71) Applicant: SUMITOMO METAL MINING CO., LTD.
Tokyo
105-8716 (JP)

(72) Inventor: KAWAKUBO, Katsuhiro
Ome-shi, Tokyo 198-0025 (JP)

(74) Representative: Jones, Nicholas Andrew
Withers & Rogers LLP
2 London Bridge
London SE1 9RA (GB)

(54) **RUTHENIUM OXIDE POWDER, COMPOSITION FOR THICK-FILM RESISTOR, PASTE FOR THICK-FILM RESISTOR, AND THICK-FILM RESISTOR**

(57) A ruthenium oxide powder has a rutile type crystal structure, has Lc/La of 0.6913 or greater, where La is a lattice constant of an a-axis and Lc is a lattice constant of a c-axis as measured by X-ray diffraction, and has a crystallite size of 10 nm or greater and 80 nm or less.

FIG.1

## Description

TECHNICAL FIELD

The present invention relates to ruthenium oxide powders, compositions for thick film resistors, pastes for thick film resistors, and thick film resistors.

BACKGROUND OF THE INVENTION

As resistors, such as chip resistors, hybrid ICs, resistor networks, and the like, thick film resistors are typically used. A thick film resistor is formed by applying a paste for a thick film resistor onto a ceramic substrate and firing the paste.

As a composition for a thick film resistor, a composition including, as main constituent components, ruthenium-based conductive particles, such as ruthenium oxide, and a glass powder is commonly used.

Reasons why the ruthenium-based conductive particles and the glass powder are used for a thick film resistor are that the ruthenium-based conductive particles and the glass powder can be fired in air, a temperature coefficient of resistance (TCR) can be brought close to 0, and a resistor having a wide range of resistance values can be formed.

When the composition for the thick film resistor, which includes the ruthenium-based conductive particles and the glass powder, is used, the blending ratio of the ruthenium-based conductive particles and the glass powder affects the resistance value of a resultant thick film resistor. Specifically, if the blending ratio of the ruthenium-based conductive particles increases, the resistance value of the thick film resistor decreases, and if the blending ratio of the ruthenium-based conductive particles decreases, the resistance value of the thick film resistor increases. By utilizing the above characteristics, the blending ratio between the ruthenium-based conductive particles and the glass powder is adjusted in the thick film resistor to achieve a desired resistance value.

In recent years, the number of resistors mounted in electric and electronic devices has increased. Thus, it is desired that each resistor has high accuracy in a resistance value and has a temperature coefficient of resistance (TCR) of close to 0.

As described above, when a low resistance value is desired, a large amount of the ruthenium-based conductive particles and a small amount of the glass powder are blended in the composition for the thick film resistor that includes the ruthenium-based conductive particles and the glass powder. When a high resistance value is desired, the resistance value is adjusted by blending a small amount of the ruthenium-based conductive particles and a large amount of the glass powder.

However, the temperature coefficient of resistance (TCR) is likely to be plus in a region of a low resistance value region where a large amount of the ruthenium-based conductive particles is blended, and the temperature coefficient of resistance (TCR) is likely to be minus in a region of a high resistance value where a small amount of the ruthenium-based conductive particles is blended. The temperature coefficient of resistance (TCR) indicates a change in a resistance value corresponding to a temperature change, and is one of important characteristics of the thick film resistor. The temperature coefficient of resistance can be adjusted mainly by adding a metal oxide, which is referred to as a modifier, to the composition for the thick film resistor. It is relatively easy to adjust the temperature coefficient of resistance to become minus. Examples of the modifier used include manganese oxide, niobium oxide, tantalum oxide, titanium oxide, and the like. However, it is difficult to adjust the temperature coefficient of resistance to become plus. Therefore, conductive particles for a thick film resistor are desirably conductive particles which can adjust the temperature coefficient of resistance to be close to 0 or to become plus, when the particles are used for a thick film resistor.

A temperature coefficient of resistance (TCR) of a thick film resistor is evaluated by a cold temperature coefficient of resistance (COLD-TCR) on a low temperature side, and a hot temperature coefficient of resistance (HOT-TCR) on a high temperature side relative to an ambient temperature as a reference.

In recent years, there has been an increasing demand for higher precision of electric components, and therefore both a cold temperature coefficient of resistance (COLD-TCR) and a hot temperature coefficient of resistance (HOT-TCR) are desired to be close to 0.

In the case of a thick film resistor including ruthenium-based conductive particles and a glass powder, a cold temperature coefficient of resistance (COLD-TCR) on a low temperature side and a hot temperature coefficient of resistance (HOT-TCR) on a high temperature side are not generally the same, and it is difficult to bring both close to 0.

Patent Document 1 discloses a resistor paste including a glass composition substantially free from at least lead, a conductive material substantially free from lead, and an organic vehicle mixed with the glass composition and the conductive material, where an average particle size of the conductive material is 5 $\mu$m or greater and 50 $\mu$m or less.

According to Patent Document 1, since the average particle size of the conductive material is 5 $\mu$m or greater and 50 $\mu$m or less, while achieving a high resistance value of 10 k$\Omega$ per unit area or greater, it is possible to achieve a small variation of resistance values, a small absolute value of temperature characteristics (TCR), and good voltage resistance characteristics (short term overload (STOL)).

RELATED-ART DOCUMENT

Patent Document

Patent Document 1: Japanese Patent Application Laid-Open No. 2005-129806
Patent Document 2: Japanese Patent Application Laid-Open No. 2005-209742

SUMMARY OF THE INVENTION

Problems to be Solved by the Invention

There is a demand for ruthenium-based conductive particles, which can bring both a cold temperature coefficient of resistance (COLD-TCR) on a low temperature side and a hot temperature coefficient of resistance (HOT-TCR) on a high temperature side close to 0, and can reduce a difference between the cold temperature coefficient of resistance and the hot temperature coefficient of resistance, when the ruthenium-based conductive particles are used in a thick film resistor. However, in Patent Document 1, a cold temperature coefficient of resistance on a low temperature side, or a difference between a cold temperature coefficient of resistance and a hot temperature coefficient of resistance are not evaluated.

Considering the above-described problems existing in the related art, an object of one aspect of the present invention is to provide a ruthenium oxide powder that, when used in a thick film resistor, can bring a temperature coefficient of resistance close to 0, and can reduce a difference between a cold temperature coefficient of resistance and a hot temperature coefficient of resistance.

Means for Solving the Problems

According to the present invention for solving the above problems, there is provided a ruthenium oxide powder that has a rutile type crystal structure, has Lc/La of 0.6913 or greater, where La is a lattice constant of an a-axis and Lc is a lattice constant of a c-axis as measured by X-ray diffraction, and has a crystallite size of 10 nm or greater and 80 nm or less.

Effects of the Invention

According to one aspect of the present invention, there is provided a ruthenium oxide powder that, when used in a thick film resistor, can bring a temperature coefficient of resistance close to 0, and can reduce a difference between a cold temperature coefficient of resistance and a hot temperature coefficient of resistance.

BRIEF DESCRIPTION OF THE DRAWINGS

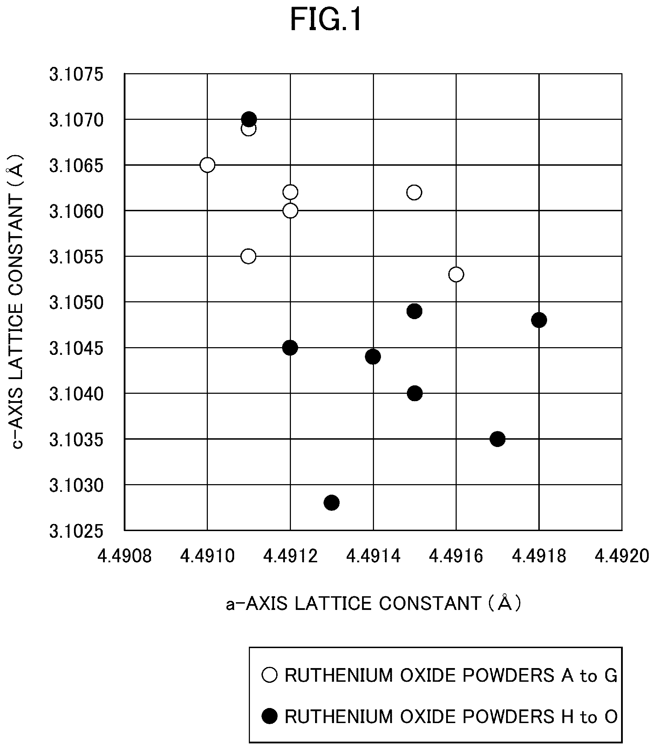

Fig. 1 is an explanatory diagram depicting a relationship between the lattice constant of the a-axis and the lattice constant of the c-axis of ruthenium oxide powders used in Examples and Comparative Examples.

DETAILED DESCRIPTION OF THE INVENTION

Hereinafter, embodiments of the ruthenium oxide powder, the composition for the thick film resistor, the paste for the thick film resistor, and the thick film resistor of the present invention will be described.

[Ruthenium oxide powder]

The ruthenium oxide powder of the present embodiment has a rutile type crystal structure, has Lc/La of 0.6913 or greater, where La is a lattice constant of an a-axis and Lc is a lattice constant of a c-axis as measured by X-ray diffraction, and has a crystallite size of 10 nm or greater and 80 nm or less.

The inventors of the present invention have studied a ruthenium oxide powder that when used in a thick film resistor, can bring a temperature coefficient of resistance close to 0, and can reduce a difference between a cold temperature coefficient of resistance and a hot temperature coefficient of resistance.

As a result, the inventors have found that a temperature coefficient of resistance (TCR) of a thick film resistor, which is formed using a composition for a thick film resistor including a ruthenium oxide powder, a glass powder, and the like, can be brought close to 0 by setting a ratio of a lattice constant of an a-axis and a lattice constant of a c-axis of the ruthenium oxide powder to a predetermined value or greater. Specifically, the inventors have found that the cold temperature coefficient of resistance and the hot temperature coefficient of resistance of the thick film resistor can be brought close to 0, and a difference between the cold temperature coefficient of resistance and the hot temperature coefficient of resistance can be reduced.

Further, the inventors have found that a thick film resistor having a small variation in a resistance value and having good electrical characteristics can be formed by setting a crystallite size of the ruthenium oxide powder in a predetermined range.

Based on the above findings, the present invention has been completed. Hereinafter, the ruthenium oxide powder of the present embodiment will be described.

(Ratio of lattice constant Lc of c-axis to lattice constant La of a-axis)

The lattice constant and crystallite size of the ruthenium oxide powder vary depending on a production method, production conditions, and the like. The inventors of the present invention have found that the lattice constant of the ruthenium oxide powder affects characteristics of a thick film resistor that is formed using the composition for the thick film resistor including the ruthenium oxide powder and the glass powder as described above, and have completed the present invention.

According to the study conducted by the inventors of the present invention, it is preferred that the ruthenium oxide powder has a rutile type crystal structure. In addition, a ratio of the lattice constant Lc of the c-axis to the lattice constant La of the a-axis of the ruthenium oxide powder is important. Specifically, by using a ruthenium oxide powder having Lc/La of 0.6913 or greater, the temperature coefficient of resistance (TCR) of a thick film resistor that is formed using the ruthenium oxide powder can be brought close to 0.

For example, a bulk state of ruthenium oxide having a rutile type crystal structure, which is a tetragonal crystal, and a sufficiently large crystal size has an a-axis lattice constant of 4.499 Å, and a c-axis lattice constant of 3.107 Å. Note that Lc/La of the lattice constant Lc of the c-axis of the ruthenium oxide bulk to the lattice constant La of the a-axis of the ruthenium oxide bulk is 0.6906. The lattice constant of the bulk state of the ruthenium oxide is acquired from the International Centre for Diffraction Data.

Conversely, the lattice constant of the ruthenium oxide powder of the present embodiment can be made smaller than that of the bulk state, for example, in both the a-axis and the c-axis, and the ratio Lc/La can fall within the above-described range.

According to the study conducted by the inventors of the present invention, in a thick film resistor including a ruthenium oxide powder having Lc/La of less than 0.6913, a cold temperature coefficient of resistance (COLD-TCR) and a hot temperature coefficient of resistance (HOT-TCR) are significantly different from each other. Therefore, the thick film resistor including the ruthenium oxide powder having Lc/La of less than 0.6913 cannot reduce a difference between the cold temperature coefficient of resistance (COLD-TCR) and the hot temperature coefficient of resistance (HOT-TCR) and cannot bring both close to 0.

Note that an upper limit of Lc/La, which is a ratio of the lattice constant Lc of the c-axis to the lattice constant La of the a-axis of the ruthenium oxide powder of the present embodiment, is not particularly limited. In the case where a crystallite size is 10 nm or greater and 80 nm or less, for example, the upper limit of Lc/La is 0.692 or less.

The ratio Lc/La of the lattice constant Lc of the c-axis to the lattice constant La of the a-axis increases as the lattice constant of the c-axis increases and the lattice constant of the a-axis decreases. According to the study conducted by the inventors of the present invention, there is not however a clear correlation between the lattice constant of the a-axis of the ruthenium oxide powder and the lattice constant of the c-axis of the ruthenium oxide powder, and the Lc/La cannot be controlled, for example, only by controlling the lattice constant of the a-axis or the c-axis.

Patent Document 2 has brought attention to an a-axis and b-axis of ruthenium oxide and discloses that the a-axis and the b-axis are set within predetermined ranges. According to the study conducted by the inventors of the present invention, however, a cold temperature coefficient of resistance (COLD-TCR) and a hot temperature coefficient of resistance (HOT-TCR) of a thick film resistor including a ruthenium oxide powder cannot be brought close to 0 only by setting the lattice constant of the a-axis and the lattice constant of the b-axis of the ruthenium oxide powder in the predetermined ranges. In addition, a difference between the hot temperature coefficient of resistance and the cold temperature coefficient of resistance cannot be reduced by setting the lattice constant of the a-axis and the lattice constant of the b-axis of the ruthenium oxide powder in the predetermined ranges.

Accordingly, in the case where a thick film resistor is used, it is important to set Lc/La to a predetermined value or greater in order to bring the cold temperature coefficient of resistance (COLD-TCR) and the hot temperature coefficient of resistance (HOT-TCR) close to 0, and reduce the difference between the hot temperature coefficient of resistance and the cold temperature coefficient of resistance.

(Crystallite size)

By setting the crystallite size of the ruthenium oxide powder of the present embodiment to 10 nm or greater and 80 nm or less (100 Å or greater and 800 Å or less), an accuracy in a resistance value of a thick film resistor formed using the composition for the thick film resistor including the ruthenium oxide powder and the like can be improved. Specifically, a variation in resistance values can be minimized. Moreover, by using the ruthenium oxide powder having the crystallite size and the lattice constant ratio Lc/La within the predetermined ranges, a difference between a cold temperature coefficient of resistance and a hot temperature coefficient of resistance of the thick film resistor formed using the composition for the thick film resistor including the ruthenium oxide powder and the like can be reduced, and in particular, both can be brought close to 0. Further, by using the ruthenium oxide powder satisfying the range of the crystallite size, a thick film resistor having good electrical characteristics can be formed.

A fine ruthenium oxide powder is generally used in a thick film resistor. In the fine ruthenium oxide powder, primary particles are substantially composed of single crystals, and therefore a crystallite size of the ruthenium oxide powder is close to a particle size of the primary particles. However, when the crystallite size of the ruthenium oxide powder is less than 10 nm, a difference between a cold temperature coefficient of resistance (COLD-TCR) and a hot temperature coefficient of resistance (HOT-TCR) of the thick film resistor becomes large, and both cannot be brought close to 0. Further, when the crystallite size of the ruthenium oxide powder is greater than 80 nm, a resistance value of the thick film resistor varies greatly, accuracy in the resistance value is lowered, the resistance value changes greatly with a load voltage, and electrical characteristics are impaired.

(Lattice constant)

When the lattice constant is described through the ruthenium oxide powder having the crystallite size of 10 nm or greater and 80 nm or less referring to, as examples, Examples and Comparative Examples of the present invention, the lattice constant of the a-axis is 4.491 Å or greater and 4.4918 Å or less. Therefore, in order to adjust the ratio Lc/La of the lattice constant Lc of the c-axis to the lattice constant La of the a-axis of the present embodiment to 0.6913 or greater, the lattice constant of the c-axis can be set to 3.105 Å or greater. The upper limit of the lattice constant of the c-axis of the ruthenium oxide powder of the present embodiment is not particularly limited. For example, the upper limit can be 3.108 Å or less.

As described above, Lc/La of the lattice constant Lc of the c-axis of the ruthenium oxide bulk and the lattice constant La of the a-axis of the ruthenium oxide bulk is 0.6906. On the other hand, the ratio Lc/La of the lattice constant of the c-axis of the ruthenium oxide powder of the present embodiment to the lattice constant La of the a-axis of the ruthenium oxide powder of the present embodiment is 0.6913 or greater. From the above, the ruthenium oxide powder of the present embodiment has a relatively long c-axis, if the a-axis is identical to the a-axis of the bulk.

Note that a lattice constant of a ruthenium oxide powder varies depending on raw materials and production conditions during production of the ruthenium oxide powder. It has been known from the results of experiments conducted by the present inventors or Patent Document 2 that the lattice constant of the a-axis of the ruthenium oxide powder is 4.475 Å or greater. For the ruthenium oxide powder of the present embodiment, the ratio Lc/La of the lattice constant Lc of the c-axis to the lattice constant La of the a-axis may be 0.6913 or greater, and the ratio Lc/La is realized within a range of the lattice constants that the ruthenium oxide particles can have.

(Specific Surface Area Diameter)

A particle size of the ruthenium oxide powder of the present embodiment is not particularly limited. For example, a specific surface area diameter of the ruthenium oxide powder of the present embodiment is preferably 10 nm or greater and 115 nm or less.

The specific surface area diameter of the ruthenium oxide powder can be calculated from the specific surface area. Specifically, the relational expression represented by the following equation (1) is satisfied when a particle diameter, which is a specific surface area diameter, of the ruthenium oxide powder, is determined as D (nm), a density is determined as $\rho$ (g/cm$^3$), a specific surface area is determined as S (m$^2$/g), and particles included in the ruthenium oxide powder are determined as spheres.

[Math. 1]

$$D(nm) = 6 \times 10^3 / (\rho \cdot S) \qquad \cdots (1)$$

In the present embodiment, the particle size, which is the specific surface area diameter, can be calculated according to the equation (1) in which the density $\rho$ of the ruthenium oxide is determined as 7.05 g/cm$^3$.

(Characteristics of thick film resistor formed using ruthenium oxide powder)

As described above, a thick film resistor formed using the ruthenium oxide powder of the present embodiment can bring both a cold temperature coefficient of resistance and a hot temperature coefficient of resistance close to 0 and reduce a difference between the cold temperature coefficient of resistance and the hot temperature coefficient of resistance.

Specifically, the temperature coefficient of resistance of the thick film resistor is preferably -50 ppm/°C or greater and +50 ppm/°C or less, more preferably -40 ppm/°C or greater and +40 ppm/°C or less, and yet more preferably -30 ppm/°C or greater and +30 ppm/°C or less. Note that the above ranges are preferred ranges for both the hot temperature coefficient of resistance and the cold temperature coefficient of resistance.

Moreover, the difference between the hot temperature coefficient of resistance and the cold temperature coefficient of resistance of the thick film resistor is preferably 70 ppm/°C or less, and more preferably 60 ppm/°C or less. As demonstrated in the below-described Examples, the cold temperature coefficient of resistance and hot temperature coefficient of resistance of the thick film resistor produced using the composition for the thick film resistor including the ruthenium oxide powder of the present embodiment can be -30 ppm/°C or greater and +30 ppm/°C or less. Further, the difference between the hot temperature coefficient of resistance and the cold temperature coefficient of resistance of the thick film resistor can be reduced.

Further, the thick film resistor formed using the composition for the thick film resistor including the ruthenium oxide powder of the present embodiment and the like can realize a highly precise temperature coefficient of resistance and resistance value, and can achieve excellent characteristics in current noise, a short term overload (STOL) test, and the like.

As described above, the thick film resistor formed using the composition for the thick film resistor or the paste for the thick film resistor, which includes the ruthenium oxide powder of the present embodiment, can achieve excellent characteristics in terms of the temperature coefficient of resistance, accuracy in a resistance value, current noise, and a short term overload test.

[Production method for ruthenium oxide powder]

A configuration example of a production method for a ruthenium oxide powder of the present embodiment will be described hereinafter. According to the production method for the ruthenium oxide powder of the present embodiment, the above-described ruthenium oxide powder can be produced, and therefore redundant description, which has been already described, will be omitted.

The production method for the ruthenium oxide powder of the present embodiment is not particularly limited. The production method and production conditions can be selected so that the ratio La/Lc of the lattice constant Lc of the c-axis to the lattice constant La of the a-axis and the crystallite size satisfy the above-mentioned ranges.

As a typical production method for a ruthenium oxide powder used in a composition for thick film resistor, there is a method in which a heat treatment is performed on a ruthenium oxide powder that is synthesized from a fluid including ruthenium ions and is hydrated. In the above production method, the lattice constant and the crystallite size can be adjusted and selected according to production conditions.

In the method where the heat treatment is performed on the hydrated ruthenium oxide powder, the lattice constant and crystallite size are selected by a combination of a wet synthesis method and conditions and a method and conditions of the heat treatment of the hydrated ruthenium oxide powder, thereby synthesizing the ruthenium oxide particles of the present embodiment.

More specifically, the production method for the ruthenium oxide powder can include, for example, the following steps:

A ruthenium oxide hydrate generation step of synthesizing a ruthenium oxide hydrate in a wet process.

A ruthenium oxide hydrate recovery step of separating and recovering the ruthenium oxide hydrate in the solution.

A drying step of drying the ruthenium oxide hydrate.

A heat treatment step of performing a heat treatment on the ruthenium oxide hydrate.

Note that a typical production method for a ruthenium oxide powder, in which ruthenium oxide having a large particle size is produced, and is then pulverized, is not suitable as the production method for the ruthenium oxide powder of the present embodiment because a particle size is not readily reduced, and the particle size tends to greatly vary.

In the ruthenium oxide hydrate generation step, a method of synthesizing a ruthenium oxide hydrate is not particularly limited. Examples of the synthesis method include a method in which a ruthenium oxide hydrate is precipitated and deposited in an aqueous solution including ruthenium. Specific examples of the synthesis method include: a method in which ethanol is added to a $K_2Ru_2O_4$ aqueous solution to yield a precipitate of a ruthenium oxide hydrate; a method in which an $RuCl_3$ aqueous solution is neutralized with KOH or the like to yield a precipitate of a ruthenium oxide hydrate; and the like.

Then, a solid-liquid separation of the precipitate of the ruthenium oxide hydrate is performed in the ruthenium oxide hydrate recovery step and the drying step as described above, and the precipitate is washed as necessary and then dried, thereby obtaining a powder of the ruthenium oxide hydrate.

The conditions of the heat treatment step are not particularly limited. For example, the heat treatment is performed on the ruthenium oxide hydrate powder at a temperature of 400 °C or higher in an oxidizing atmosphere so that water of crystallization is removed and a ruthenium oxide powder having high crystallinity can be obtained. The oxidizing atmosphere is a gas including oxygen in an amount of 10 vol% or greater. For example, air can be used.

A temperature at which the heat treatment is performed on the ruthenium oxide hydrate powder is preferably 400 °C or higher as described above, because a ruthenium oxide ($RuO_2$) powder having particularly excellent crystallinity can be obtained. The upper limit of the heat treatment temperature is not particularly limited. If the heat treatment temperature is excessively high, a crystallite size or specific surface area diameter of the ruthenium oxide powder may become large, or a proportion of ruthenium that volatilizes as a 6 valent or 8 valent oxide ($RuO_3$ or $RuO_4$) may increase. Therefore, the heat treatment is preferably performed, for example, at a temperature of 1,100 °C or lower.

In particular, the temperature at which the heat treatment is performed on the ruthenium oxide hydrate powder is more preferably 500 °C or higher and 1,100 °C or lower.

As described above, the lattice constant and the crystallite diameter of the ruthenium oxide powder to be obtained can be changed by synthesis conditions, heat treatment conditions, and the like in the production of the ruthenium oxide hydrate. Therefore, it is preferred that, for example, a preliminary test or the like is performed and conditions are selected so that a ruthenium oxide powder having a desired lattice constant, lattice constant ratio (Lc/La), and crystallite size is obtained.

The lattice constant and crystallite size of the ruthenium oxide powder can be determined by analyzing a diffraction pattern obtained by powder X-ray diffraction. In recent years, it has become possible to accurately measure and calculate a lattice constant and crystallite size of a powder by Rietveld refinement of powder X-ray diffraction.

The ruthenium oxide powder of the present embodiment can be used in combination with a glass powder to form a composition for a thick film resistor, and the composition for the thick film resistor can be used for production of a thick film resistor. By using the ruthenium oxide powder of the present embodiment in the composition for the thick film resistor, a thick film resistor having a temperature coefficient of resistance brought close to 0 and a small difference between a cold temperature coefficient of resistance and a hot temperature coefficient of resistance can be obtained, regardless of a composition or the like of the glass powder. Specifically, according to the ruthenium oxide powder of the present embodiment, a thick film resistor having the highly precise temperature coefficient of resistance of close to 0 can be formed using, for example, either a lead-containing glass powder, which has been generally used, or a lead-free glass powder for reducing an adverse effect on human bodies or pollution. Moreover, the difference between the cold temperature coefficient of resistance and the hot temperature coefficient of resistance can be reduced.

Further, according to the thick film resistor obtained using the ruthenium oxide powder of the present embodiment, a variation in the resistance value is small, and excellent characteristics in terms of current noise, a short term overload (STOL) test, and the like can be achieved.

[Composition for thick film resistor]

Next, a configuration example of the composition for the thick film resistor will be described.

The composition for the thick film resistor of the present embodiment can include the above-described ruthenium oxide powder, which serves as conductive particles, and a glass powder. Note that the composition for the thick film resistor of the present embodiment can be composed of the ruthenium oxide powder and the glass powder. Even in this case, the composition for the thick film resistor may include inevitable impurities.

The components included in the composition for the thick film resistor of the present embodiment will be described hereinafter.

(1) Ruthenium oxide powder

As described above, the ruthenium oxide powder has a rutile type crystal structure, has a ratio Lc/La of 0.6913 or greater where La is a lattice constant of an a-axis and Lc is a lattice constant of a c-axis as measured by X-ray diffraction, and has a crystallite size of 10 nm or greater and 80 nm or less.

Other features of the ruthenium oxide powder have been already described, and therefore the redundant description will be omitted here.

(2) Glass powder

As the glass powder, a glass powder that has been used for a composition for a thick film resistor can be used.

(Configuration example of composition of glass powder)

As glass of the glass powder that can be used in the present embodiment, for example, one or more selected from the group consisting of lead aluminoborosilicate glass, zinc borosilicate glass, calcium borosilicate glass, and barium borosilicate glass can be used. Further, lead-free glass, which is, for example, one or more selected from the group consisting of zinc borosilicate glass, calcium borosilicate glass, and barium borosilicate glass, can be used.

The glass can be typically produced by mixing predetermined components or precursors of the components according to an intended composition, melting the obtained mixture, and rapidly cooling the mixture. The melting temperature is not particularly limited, but the melting is performed, for example, at approximately 1,400 °C. Further, rapid cooling can be often performed by immersing the melted mixture in cold water or pouring the melted mixture onto a cold belt. The glass is pulverized to a desired particle size by a ball mill, a vibration mill, a planetary mill, a bead mill, or the like.

A lead-containing glass powder, which has been generally used for a composition for a thick film resistor, can be used. In recent years, it is however desired to use a lead-free glass powder in view of concerns about environmental issues.

In the composition of the lead-free glass powder, which is included in the composition for the thick film resistor, a metal oxide other than $SiO_2$ forming a skeleton is blended to adjust fluidity during firing. As the metal oxide other than $SiO_2$, $B_2O_3$, RO (R is one or more alkaline earth metals selected from the group consisting of Ca, Sr, and Ba), or the like is used. Therefore, the glass powder used in the composition for the thick film resistor of the present invention preferably includes $SiO_2$, $B_2O_3$, and RO. When a total amount of $SiO_2$, $B_2O_3$, and RO in the glass composition is determined as 100 parts by mass, the glass powder preferably includes $SiO_2$ in an amount of 20 parts by mass or greater and 50 parts by mass or less, $B_2O_3$ in an amount of 10 parts by mass or greater and 30 parts by mass or less, and RO in an amount of 35 parts by mass or greater and 65 parts by mass or less. By using the above glass powder, a temperature coefficient of resistance of the obtained thick film resistor can be particularly readily brought close to 0.

Since $SiO_2$ is included in an amount of 20 parts by mass or greater, when a total amount of $SiO_2$, $B_2O_3$, and RO in the glass composition of the glass powder is determined as 100 parts by mass, the glass can be easily formed and weather resistance can be enhanced. Since $SiO_2$ is included in an amount of 50 parts by mass or less, moreover, a softening temperature of the glass powder is inhibited from becoming high, and the fluidity can be increased.

Since the glass powder includes $B_2O_3$ in an amount of 10 parts by mass or greater, a softening temperature of the glass powder is inhibited from becoming high, and the fluidity can be increased. Since $B_2O_3$ is included in an amount of 30 parts by mass or less, moreover, weather resistance can be enhanced.

Since the glass powder includes RO in an amount of 35 parts by mass or greater, a softening temperature of the glass powder is inhibited from becoming high, and the fluidity can be increased. Since RO is included in an amount of 65 parts by mass or less, moreover, crystallization is inhibited, and therefore glass is easily formed.

The lead-free glass powder of the composition for the thick film resistor preferably includes the above-mentioned $SiO_2$, $B_2O_3$, and RO as essential components. The glass powder can be composed only of $SiO_2$, $B_2O_3$, and RO, but may include other components for the purpose of adjusting weather resistance of the glass or fluidity during firing. Examples of the other components include $Al_2O_3$, $ZrO_2$, $TiO_2$, $SnO_2$, ZnO, $Li_2O$, $Na_2O$, $K_2O$, and the like. $Al_2O_3$ has a function of inhibiting phase separation of glass, $ZrO_2$ and $TiO_2$ have a function of improving weather resistance of glass, and $SnO_2$, ZnO, $Li_2O$, $Na_2O$, $K_2O$, and the like have a function of enhancing fluidity of glass.

(Softening point)

A softening point is used as a parameter that affects fluidity of glass when the composition for thick film resistor is fired.

A temperature of firing the composition for the thick film resistor or the paste for the thick film resistor in production of a thick film resistor is typically 800 °C or higher and 900 °C or lower.

In the case where the firing temperature of the composition for the thick film resistor or the like in production of a thick film resistor is 800 °C or higher and 900 °C or lower as described above, a softening point of the glass powder used for the composition for the thick film resistor according to the present embodiment is preferably 600 °C or higher and 800 °C or lower, and more preferably 600 °C or higher and 750 °C.

In the present specification, the softening point is a temperature of a peak of a differential thermal curve obtained by heating the glass at the heating rate of 10 °C/min in an ambient atmosphere by differential thermal analysis (TG-DTA), where the peak is present on a high temperature side relative to the lowest temperature at which the differential thermal curve starts to decrease, and is a subsequent peak at which the differential thermal curve starts to decrease.

(Particle size)

A particle size of the glass powder is not particularly limited, but an excessively large particle size can cause an increase in a resistance value of a thick film resistor or reduction in load characteristics. To avoid the above, a 50% volume cumulative particle size of the glass powder is ideally 5 $\mu$m or less, more ideally 3 $\mu$m or less, and yet more ideally 1.5 $\mu$m or less. For the pulverization of the glass, a ball mill, a planetary mill, a bead mill, or the like can be used. Wet pulverization is desirable for achieving a sharp particle size distribution.

When the particle size of the glass powder is excessively small, productivity becomes low, and an amount of impurities or the like included may increase. Therefore, the 50% volume cumulative particle size of the glass powder is preferably 0.5 $\mu$m or greater.

The 50% volume cumulative particle size is a particle size at 50% of a cumulative volume distribution measured by a laser diffraction/scattering method.

(3) Blending ratio of ruthenium oxide powder and glass powder.

Ratios of the ruthenium oxide powder and the glass powder included in the composition for the thick film resistor can be changed depending on a desired resistance value or the like, and therefore mass ratios of the ruthenium oxide powder and the glass powder included in the composition for the thick film resistor of the present embodiment are not particularly limited.

However, a ratio of a mass of the ruthenium oxide powder to a mass of the glass powder in the composition for the thick film resistor of the present embodiment is preferably in the range of 60 : 40 to 5 : 95. Specifically, when a total mass of the ruthenium oxide powder and the glass powder is determined as 100%, a mass percentage of the ruthenium oxide powder is preferably 5% or greater and 60% or less.

When the mass percentage of the ruthenium oxide powder relative to 100% of the total mass of the ruthenium oxide powder and the glass powder is 60% or less, brittleness of the fired film obtained by firing the composition for the thick film resistor and the like can be inhibited, and formation of cracks or the like can be avoided.

Since the mass percentage of the ruthenium oxide powder relative to 100% of the total mass of the ruthenium oxide powder and the glass powder is 5% or greater, a resistance value of a thick film resistor obtained using the composition for the thick film resistor and the like can be inhibited from becoming excessively high, and therefore stability is increased.

(4) Additives

The composition for the thick film resistor of the present embodiment can be composed of the above-described ruthenium oxide powder and glass powder, but the composition for the thick film resistor can further include additives. The composition for the thick film resistor of the present embodiment can be composed of the ruthenium oxide powder, the glass powder, and the additives. Even in the above case, the composition for the thick film resistor may include inevitable impurities.

In the case where a thick film resistor having a lower resistance value is desired, the composition for the thick film resistor of the present embodiment can include an Ag powder or a Pd powder.

The thick film resistor whose resistance value is reduced by using the composition for the thick film resistor of the present embodiment including the above-described ruthenium oxide powder, the glass powder, and the Ag powder or the Pd powder can also achieve both a cold temperature coefficient of resistance and a hot temperature coefficient of resistance to be close to 0.

The composition for the thick film resistor of the present embodiment may include additives that are typically used for improving or adjusting a resistance value, a temperature coefficient of resistance, voltage load characteristics, and trimming properties of thick film resistors.

Examples of the typical additives include at least one selected from the group consisting of $Nb_2O_5$, $Ta_2O_5$, $TiO_2$, $MnO_2$, $CuO$, $ZrO_2$, $Al_2O_3$, $SiO_2$, $ZrSiO_4$, and the like.

$Nb_2O_5$, $Ta_2O_5$, $TiO_2$, and $MnO_2$ have an effect of reducing a variation in a resistance value when a voltage load is applied to a thick film resistor, but $Nb_2O_5$, $Ta_2O_5$, $TiO_2$, and $MnO_2$ shift the temperature coefficient of resistance to the minus side. $CuO$ has an effect of reducing a resistance value of a thick film resistor to shift a temperature coefficient of resistance to the plus side. $ZrO_2$, $Al_2O_3$, $SiO_2$, and $ZrSiO_4$ have an effect of inhibiting extension of microcracks, which are likely to be formed by laser trimming performed for adjusting a resistance value of a thick film resistor.

Since the composition for the thick film resistor of the present embodiment includes the above additives, a thick film resistor having more excellent characteristics can be produced.

An amount of the above additives in the composition for the thick film resistor of the present embodiment is adjusted according to the intended purpose. When a total amount of the ruthenium oxide powder and the glass powder is determined as 100 parts by mass, the above additives are preferably included, for example, in an amount of 0 parts by mass or greater and 20 parts by mass or less.

[Paste for thick film resistor]

Next, the paste for the thick film resistor of the present embodiment will be described.

The paste for the thick film resistor of the present embodiment can include a ruthenium oxide powder, a glass powder, and an organic vehicle. The paste for the thick film resistor of the present embodiment can be composed of the ruthenium oxide powder, the glass powder, and the organic vehicle. Even in this case, the paste for the thick film resistor may include inevitable impurities.

The ruthenium oxide powder and the glass powder can be both mixed and dispersed in the organic vehicle to form a paste for a thick film resistor for printing.

Note that the paste for the thick film resistor of the present embodiment may further include the additives described in association with the composition for thick film resistor. In this case, the ruthenium oxide powder, the glass powder, and the additives, which are included in the paste for the thick film resistor of the present embodiment, are all preferably mixed and dispersed in the organic vehicle to form a paste for a thick film resistor for printing.

The paste for the thick film resistor of the present embodiment can be composed of the ruthenium oxide powder, the glass powder, the additives, and the organic vehicle. Even in this case, the paste for the thick film resistor may include inevitable impurities.

Each of components included in the paste for the thick film resistor of the present embodiment will be described hereinafter.

(1) Components included in paste for thick film resistor

(1-1) Ruthenium oxide powder

As the ruthenium oxide powder, the above-described ruthenium oxide powder can be used. Specifically, as described above, the ruthenium oxide powder has a rutile type crystal structure, has Lc/La of 0.6913 or greater where La is a lattice constant of an a-axis and Lc is a lattice constant of a c-axis as measured by X-ray diffraction, and can have a crystallite size of 10 nm or greater and 80 nm or less.

Other features of the ruthenium oxide powder have been already described, and therefore the redundant description will be omitted here.

(1-2) Glass powder

As the glass powder, a glass powder, which has been used for a paste for a thick film resistor, can be used.

The glass powder includes, for example, $SiO_2$, $B_2O_3$, and RO (R is one or more alkaline earth metals selected from the group consisting of Ca, Sr, and Ba). When a total mass of $SiO_2$, $B_2O_3$, and RO is determined as 100 parts by mass, $SiO_2$ is preferably included in an amount of 20 parts by mass or greater and 50 parts by mass or less, $B_2O_3$ is preferably included in an amount of 10 parts by mass or greater and 30 parts by mass or less, and RO is preferably included in an amount of 35 parts by mass or greater and 65 parts by mass or less. Since the above glass powder is used, a temperature coefficient of resistance of a thick film resistor to be obtained can be particularly readily brought close to 0.

As the glass powder, a glass powder having the same configuration, such as a composition, characteristics, and the like, as the configuration of the glass powder described in association with the composition for the thick film resistor can be used. Therefore, the redundant description will be omitted here.

(1-3) Blending ratio of ruthenium oxide powder and glass powder

Since ratios of the ruthenium oxide powder and the glass powder included in the paste for the thick film resistor can be changed depending on a desired resistance value or the like, mass ratios of the ruthenium oxide powder and the glass powder included in the paste for the thick film resistor of the present embodiment are not particularly limited.

However, in the paste for the thick film resistor of the present embodiment, a ratio of a mass of the ruthenium oxide powder to a mass of the glass powder is preferably in the range of 60 : 40 to 5 : 95. Specifically, when a total mass of the ruthenium oxide powder and the glass powder is determined as 100%, a mass percentage of the ruthenium oxide powder is preferably 5% or greater and 60% or less.

The reason why the above range is preferred has been already described in association with the composition for the thick film resistor. Therefore, the redundant description will be omitted here.

(1-4) Organic vehicle

The organic vehicle included in the paste for the thick film resistor of the present disclosure is not particularly limited, and various organic vehicles can be used.

As the organic vehicle, for example, a solution in which a resin, such as ethyl cellulose, acrylic acid ester, methacrylic acid ester, rosin, maleic acid ester, or the like, is dissolved in a solvent, such as terpineol, butyl carbitol, butyl carbitol acetate, or the like, can be suitably used.

A dispersant, a plasticizer, or the like may be added to the organic vehicle, as necessary.

(1-5) Additives

The paste for the thick film resistor of the present embodiment may include various additives described in the composition for the thick film resistor in addition to the dispersing agent and the plasticizer, which are described in the above organic vehicle.

(2) Dispersing method

As described above, the ruthenium oxide powder and the glass powder, and optionally the additives are preferably mixed and dispersed in the organic vehicle.

A dispersion method for the ruthenium oxide powder, the glass powder, the additives, and the like is not particularly limited. Dispersion is typically performed using, for example, a three-roll mill, a bead mill, a planetary mill, or the like, which is configured to disperse fine particles. A blending ratio of the organic vehicle may be appropriately adjusted according to a printing or coating method of the paste for the thick film resistor, and is therefore not particularly limited. When a total amount of the ruthenium oxide powder, the glass powder, and the additives is determined as 100 parts by mass, for example, the paste for the thick film resistor preferably includes the organic vehicle in an amount of 20 parts by mass or greater and 200 parts by mass or less.

[Thick film resistor]

Next, the thick film resistor of the present embodiment will be described.

The thick film resistor of the present embodiment is a thick film resistor formed using the above-described composition for the thick film resistor or the above-described paste for the thick film resistor. Specifically, the thick film resistor of the present embodiment can be produced by using the above-described composition for the thick film resistor or the above-described paste for the thick film resistor.

Therefore, the thick film resistor of the present embodiment can include the above-described ruthenium oxide powder and a glass component derived from the above-described glass powder.

The thick film resistor of the present embodiment can be produced, for example, by the following production method for the thick film resistor using the above-described paste for thick film resistor. The production method includes a printing step, a drying step, and a firing step.

In the printing step, the paste for the above-described thick film resistor can be printed, for example, between a pair of electrodes formed by a thick film technology available in the related art.

In the drying step, drying is performed by heating so that the solvent, such as the organic vehicle or the like, included in the paste for the thick film resistor constituting the printed film printed by the printing step can be evaporated.

In the firing step, the printed film dried in the drying step can be fired under temperature conditions in which the peak temperature becomes 800 °C or higher and 900 °C or lower.

The thick film resistor of the present embodiment can be produced by performing the firing step.

A resistance value of the obtained thick film resistor can be adjusted by forming a glass coating on a surface of the thick film resistor according to thick film technology known in the related art, and performing laser trimming known in the related art.

As described above, in the composition for the thick film resistor or paste for the thick film resistor, the percentage of the ruthenium oxide powder relative to a total of the ruthenium oxide powder and the glass powder is preferably 5 mass% or greater and 60 mass% or less. The thick film resistor of the present embodiment can be produced using the composition for the thick film resistor or the paste for thick film resistor, and a glass component in the obtained thick film resistor is derived from the glass powder of the composition for the thick film resistor or the paste for the thick film resistor.

Therefore, similar to the composition for the thick film resistor or the paste for the thick film resistor, a percentage of the ruthenium oxide in the thick film resistor of the present embodiment is preferably 5 mass% or greater and 60 mass% or less, when a total mass of the ruthenium oxide and the glass component is determined as 100 mass%.

Moreover, the glass component included in the thick film resistor of the present embodiment is derived from the glass powder used in the composition for the thick film resistor or the like, as described above. Thus, the glass component included in the thick film resistor of the present embodiment is not particularly limited, but the glass component preferably includes, for example, $SiO_2$, $B_2O_3$, and RO (R is one or more alkaline earth metal selected from the group consisting of Ca, Sr, and Ba). In this case, when a total amount of $SiO_2$, $B_2O_3$, and RO is determined as 100 parts by mass, $SiO_2$ is preferably included in an amount of 20 parts by mass or greater and 50 parts by mass or less, $B_2O_3$ is preferably included in an amount of 10 parts by mass or greater and 30 parts by mass or less, and RO is preferably included in an amount of 35 parts by mass or greater and 65 parts by mass or less.

A production method for the thick film resistor of the present embodiment is not particularly limited. For example, the thick film resistor can be formed by firing the above-described composition for the thick film resistor on a ceramic substrate. Moreover, the thick film resistor can also be formed by applying the above-described paste for the thick film resistor onto a ceramic substrate, followed by drying and firing the paste for the thick film resistor, as described above.

According to the thick film resistor of the present embodiment, both a cold temperature coefficient of resistance and a hot temperature coefficient of resistance can be brought close to 0, and a difference between the cold temperature coefficient of resistance and the hot temperature coefficient of resistance can be reduced.

Specifically, the temperature coefficient of resistance of the thick film resistor of the present embodiment is preferably -50 ppm/°C or greater and +50 ppm/°C or less, more preferably -40 ppm/°C or greater and +40 ppm/°C or less, and yet more preferably -30 ppm/°C or greater and +30 ppm/°C or less. The above ranges are preferred ranges for both the hot temperature coefficient of resistance and the cold temperature coefficient of resistance.

Moreover, the difference between the hot temperature coefficient of resistance and the cold temperature coefficient of resistance of the thick film resistor of the present embodiment is preferably 70 ppm/°C or less, and more preferably 60 ppm/°C or less.

Further, the thick film resistor of the present embodiment can realize the above-described highly precise temperature coefficient of resistance. In addition, the thick film resistor of the present embodiment can reduce a variation in a resistance value, and can realize excellent characteristics in current noise, a short term overload (STOL) test, and the like.

As described above, the thick film resistor of the present embodiments achieve excellent characteristics in terms of the temperature coefficient of resistance, resistance value accuracy, current noise, and the short term overload test.

Note that COLD-TCR, which is the cold temperature coefficient of resistance, can be calculated according to the following equation (2).

Moreover, HOT-TCR, which is the hot temperature coefficient of resistance, can be calculated according to the following equation (3).

[Math. 2]

$$COLD - TCR(ppm/°C) = (R_{-55} - R_{25})/R_{25}/(-80) \times 10^6 \qquad \cdots (2)$$

[Math. 3]

$$HOT - TCR(ppm/°C) = (R_{125} - R_{25})/R_{25}/(100) \times 10^6 \qquad \cdots (3)$$

In the equations above, $R_{-55}$ is a resistance value at a temperature of -55 °C, $R_{25}$ is a resistance value at a temperature of 25 °C, and $R_{125}$ is a resistance value at a temperature of 125 °C.

EXAMPLES

Hereinafter, specific examples and comparative examples will be described, but the below examples shall not be construed as limiting the scope of the present invention.

[Evaluation methods]

(1) Evaluation method of ruthenium oxide powder and glass powder

(1-1) Lattice constant and crystallite size

The lattice constant and crystallite size of the ruthenium oxide powder were determined by the Rietveld refinement of X-ray diffraction.

Moreover, Lc/La was calculated by determining the determined lattice constant of the a-axis as La, and the determined lattice constant of the c-axis as Lc.

(1-2) Specific surface area diameter

The specific surface area diameter of the ruthenium oxide powder was calculated from the specific surface area and density of the ruthenium oxide powder. The specific surface area was measured by a single-point BET method, which allowed the simple measurement of a specific surface area. When the specific surface area diameter is determined as D (nm), the density is determined as $\rho$ (g/cm$^3$), the specific surface area is determined as S (m$^2$/g), and the included particles are determined as spheres, the relational expression represented by the following equation (A) is established. The specific surface area diameter calculated by D was determined as the specific surface area diameter of the ruthenium oxide powder.

[Math. 4]

$$D(nm) = 6 \times 10^3/(\rho \cdot S) \qquad \cdots (A)$$

When the specific surface area diameter was calculated, the density $\rho$ of the ruthenium oxide was set to 7.05 g/cm$^3$.

(1-3) Softening point

The softening point of the glass powder was determined as a temperature of a peak on a differential thermal curve obtained by heating the glass powder at a heating rate of 10 °C/min in the ambient atmosphere according to differential thermal analysis (TG-DTA), where the peak was present on a high temperature side relative to the lowest temperature at which the differential thermal curve started to decrease, and was a subsequent peak at which the differential thermal curve started to decrease.

(2) Evaluation method of thick film resistor

(2-1) Film thickness

The film thickness of the thick film resistor was determined as follows. First, five thick film resistors produced in each of Examples and Comparative Examples under the same conditions were subjected to the measurement of the film thickness using a stylus thickness roughness tester. The arithmetic mean of the obtained film thickness values of the five thick film resistors of each of Examples and Comparative Examples was calculated as a film thickness (fired film thickness) of the thick film resistor of each of Examples and Comparative Examples.

(2-2) Sheet resistance and CVR (coefficient of variation ratio of sheet resistance)

The sheet resistance was determined by calculating the arithmetic mean of the values of the sheet resistance measured on twenty-five thick film resistors of each of Examples and Comparative Examples under the same conditions.
The sheet resistance of each thick film resistor was measured by a digital multimeter (No. 2001, produced by KEITHLEY). In the tables, "K" represents 10$^3$, and "M" represents 10$^6$.
The coefficient of variation ratio (CVR) of the sheet resistance was determined by dividing the standard deviation of the sheet resistance values of the twenty-five thick film resistors of each of Examples and Comparative Examples produced under the same conditions with the arithmetic mean of the sheet resistance values to represent the result in percentage. CVR indicates a variation in a resistance value. The smaller the value of CVR is, the smaller the variation in the resistance value is. Therefore, CVR is, for example, preferably 5% or less.

(2-3) Temperature coefficient of resistance

Five thick film resistors of each of Examples and Comparative Examples produced under the same conditions were subjected to the measurement of the resistance value with retention of each of temperatures -55 °C, 25 °C, and 125 °C for 15 minutes, and the resistance value measured at the temperatures -55 °C, 25 °C, and 125 °C were determined as $R_{-55}$, $R_{25}$, and $R_{125}$, respectively.
A cold temperature coefficient of resistance (COLD-TCR) and a hot temperature coefficient of resistance (HOT-TCR) of each of the thick film resistors were calculated by the following equations (B) and (C), respectively, and the arithmetic mean of the values determined from the five thick film resistors was calculated. The cold temperature coefficient of resistance is presented in the column of "C-TCR" in Tables 3 and 4, and the hot temperature coefficient of resistance is presented in the column of "H-TCR" in Tables 3 and 4.

As the temperature coefficient of resistance, both COLD-TCR and HOT-TCR are preferably closer to 0. For both temperature coefficients of resistance, a standard for a highly accurate resistor is -50 ppm/°C or greater and +50 ppm/°C or less.

[Math. 5]

$$COLD - TCR(ppm/°C) = (R_{-55} - R_{25})/R_{25}/(-80) \times 10^6 \qquad \cdots (B)$$

[Math. 6]

$$HOT - TCR(ppm/°C) = (R_{125} - R_{25})/R_{25}/(100) \times 10^6 \qquad \cdots (C)$$

In each of Examples and Comparative Examples, the difference between COLD-TCR and HOT-TCR was calculated. The result is presented in the column "Difference of H and C" of Tables 3 and 4.

(2-4) Short term overload (STOL) test

A change rate of resistance value in a short term overload (STOL) test was determined by applying voltage corresponding to 0.25 W, which was 2.5 times an overload voltage (400 V when the overload voltage exceeded 400 V) to the thick film resistor produced in each of Examples and Comparative Examples for 5 seconds, and calculating a change rate in the resistance value after the application of the voltage. The resistance value was measured in the same manner as the above-described measurement method of the sheet resistance. In the evaluation of STOL, measurement and calculation were performed on ten thick film resistors of each of Examples and Comparative Examples. An absolute value of the change rate of the resistance value in the short term overload (STOL) test is preferably 1% or less, and more preferably 0.5% or less.

(2-5) Current noise

Current noise of five thick film resistors of each of Examples and Comparative Examples produced under the same conditions was measured, and the arithmetic mean of the measured values was calculated.

The current noise was measured by applying voltage corresponding to 1/10 W using a noise analyzer (model: 315c, produced by Quan-Tech). The current noise of the thick film resistor correlates with overload characteristics and reliability. The lower the value is, the better the electrical characteristics of the thick film resistor are.

The current noise is presented simply as noise in Tables 3 and 4.

[Examples 1 to 10]

(1) Composition for thick film resistor

In Examples 1 to 10, a ruthenium oxide powder, a glass powder, and an additive powder ($MnO_2$, $TiO_2$, CuO, and $SiO_2$) were blended at a ratio presented in Table 3, thereby forming a composition for a thick film resistor.

Note that in Table 3, "$RuO_2$" represents a blending ratio of the ruthenium oxide powder, and "Glass" represents a blending ratio of the glass powder. Moreover, "$MnO_2$," "$TiO_2$," "CuO," and "$SiO_2$" represents a blending ratio of a corresponding component of the additives.

In Example 1, for example, the ruthenium oxide powder of A in Table 1 was used as presented in the column "Ruthenium oxide powder type" in Table 3. In Example 1, moreover, the glass powder of a in Table 2 was used as presented in the column "Glass powder type" in Table 3.

In Example 1, therefore, 50 parts by mass of the ruthenium oxide powder of A, 50 parts by mass of the glass powder of a, and as the additives, 1.5 parts of $MnO_2$, and 1 part by mass of CuO were mixed to prepare a composition for a thick film resistor.

(Ruthenium oxide powder)

A specific surface area diameter, crystallite size, and lattice constant of each of the ruthenium oxide powders A to G used in corresponding Example are presented in Table 1. In Table 1, "c-axis lattice constant/a-axis lattice constant" corresponds Lc/La, which is a ratio of the lattice constant Lc of the c-axis to the lattice constant La of the a-axis.

Note that the relationship between the lattice constant of the a-axis and the lattice constant of the c-axis of the ruthenium oxide powder used in each of Examples and Comparative Examples is depicted in Fig. 1. As depicted in Fig. 1, it was confirmed that there was no clear correlation between the lattice constant of the a-axis and the lattice constant of the c-axis.

(Glass powder)

Moreover, a composition of the glass powder used in each of Examples is presented in Table 2.

In Examples and Comparative Examples, leadfree glass powders were used as the glass powder a to the glass powder c in view of prevention of environmental pollution. However, lead-containing glass, which has been used in the related art, may also be used.

Further, each of the glass powders a to c was pulverized so that a median diameter of a particle size distribution, which was measured by a laser diffraction particle size distribution analyzer was to be 1.3 $\mu$m or greater and 1.5 $\mu$m or less. Specifically, all of the glass powders a to c had a 50% volume cumulative particle size of 1.3 $\mu$m or greater and 1.5 $\mu$m or less.

(Additives)

As the additives, one or more selected from the group consisting of $MnO_2$, $TiO_2$, $CuO$, and $SiO_2$ were used as described above.

As the particle size of the additives, the particle size of $MnO_2$ was 0.5 $\mu$m, the particle size of $TiO_2$ was 0.3 $\mu$m, the particle size of $CuO$ was 0.5 $\mu$m, and the particle size of $SiO_2$ was 15 nm.

Each of the above particle sizes of $MnO_2$, $TiO_2$, and $CuO$ is a median diameter of a particle size distribution measured by a laser diffraction particle size analyzer similar to the case of the glass powder. Specifically, each of the above particle sizes is a 50% volume cumulative particle size.

The specific surface area of $SiO_2$ was measured according to the BET method. Specifically, the specific surface area of $SiO_2$ was calculated in the same manner as the specific surface area diameter of the above-described ruthenium oxide powder. Note that the density $\rho$ of $SiO_2$ was 2.2 g/cm$^3$.

(2) Paste for thick film resistor

In the composition for the thick film resistor of each of Examples, 43 parts by mass of an organic vehicle was added relative to 100 parts by mass of a total amount of the ruthenium oxide powder, the glass powder, and the additives, and the resulting mixture was dispersed using a three-roll mill, thereby producing a paste for a thick film resistor.

Note that a mixture in which 5 mass% or greater and 25 mass% or less of ethyl cellulose and 75 mass% or greater and 95 mass% or less of terpineol were mixed was used as the organic vehicle. The ratio of each of the components in the organic vehicle was adjusted within the above range so that the viscosities of the pastes for the thick film resistors according to Examples 1 to 10 had substantially the same value.

(3) Thick film resistor

The paste for the thick film resistor produced in each of Examples was printed between a pair of Ag/Pb electrodes, each of which was a thick film that included 1 mass% of Pd and 99 mass% of Ag and had been formed in advance on an aluminum substrate (aluminum oxide substrate) by firing, thereby forming a printed film (printing step).

The printed film obtained in the printing step was dried at 150 °C for 5 minutes (drying step).

Subsequently, the printed film (dried film) obtained in the drying step was fired in a manner such that a peak temperature was 850 °C and a retention time at the peak temperature was 9 minutes, thereby forming a thick film resistor (firing step).

A size of the thick film resistor was set such that the width of the resistor was 1.0 mm, and the length of the resistor (between the electrodes) was 1.0 mm.

The above-described evaluations were performed on the obtained thick film resistor. The evaluation results are presented in Table 3.

[Table 1]

| Ruthenium oxide powder | Specific surface area ($m^2$/g) | Specific surface area diameter (nm) | Crystallite size (nm) | Lattice constant of a-axis (Å) | Lattice constant of c-axis (Å) | Crystallite size/specific surface area diameter | c-axis lattice constant/a-axis lattice constant |
|---|---|---|---|---|---|---|---|
| A | 59.2 | 14.4 | 12.1 | 4.4916 | 3.1053 | 0.8417 | 0.69136 |
| B | 40.3 | 21.1 | 21.3 | 4.4915 | 3.1062 | 1.0086 | 0.69157 |
| C | 31.7 | 26.8 | 25.8 | 4.4911 | 3.1055 | 0.9610 | 0.69148 |
| D | 24.8 | 34.3 | 34.0 | 4.4912 | 3.1062 | 0.9908 | 0.69162 |
| E | 18.4 | 46.3 | 46.1 | 4.4912 | 3.106 | 0.9967 | 0.69157 |
| F | 15 | 56.7 | 56.3 | 4.491 | 3.1065 | 0.9923 | 0.69172 |
| G | 11.6 | 73.4 | 76.7 | 4.4911 | 3.1069 | 1.0454 | 0.69179 |
| H | 86.5 | 9.8 | 9.8 | 4.4913 | 3.1028 | 0.9960 | 0.69085 |
| I | 56.7 | 15.0 | 12.6 | 4.4917 | 3.1035 | 0.8394 | 0.69094 |
| J | 35.9 | 23.7 | 22.2 | 4.4915 | 3.104 | 0.9365 | 0.69108 |
| K | 31.7 | 26.8 | 25.7 | 4.4914 | 3.1044 | 0.9573 | 0.69119 |
| L | 22.6 | 37.7 | 34.9 | 4.4912 | 3.1045 | 0.9268 | 0.69124 |
| M | 15.9 | 53.5 | 55.3 | 4.4918 | 3.1048 | 1.0331 | 0.69122 |
| N | 11.9 | 71.5 | 78.3 | 4.4915 | 3.1049 | 1.0948 | 0.69128 |
| O | 17.4 | 48.9 | 86.2 | 4.4911 | 3.107 | 1.7624 | 0.69181 |

[Table 2]

| Glass powder | $SiO_2$ (mass%) | $B_2O_3$ (mass%) | CaO (mass%) | SrO (mass%) | BaO (mass%) | $Al_2O_3$ (mass%) | ZnO (mass%) | Total (mass%) | $SiO_2/(SiO_2+B_2O_3+RO)$ | $B_2O_3/(SiO_2+B_2O_3+RO)$ | $RO/(SiO_2+B_2O_3+RO)$ | Softening point (°C) |
|---|---|---|---|---|---|---|---|---|---|---|---|---|
| a | 38 | 16 | 10 | - | 20 | 5 | 11 | 100 | 45.2 | 19.0 | 35.7 | 720 |
| b | 24 | 21 | 20 | 3 | 12 | 4 | 16 | 100 | 30.0 | 26.3 | 43.8 | 710 |
| c | 20 | 11 | 11 | - | 45 | 3 | 10 | 100 | 23.0 | 12.6 | 64.4 | 690 |

[Table 3]

| | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Composition | Ruthenium oxide powder type | A | B | B | C | D | D | E | F | F | G |
| | Glass powder type | a | a | a | b | b | b | c | c | c | c |
| | RuO$_2$ (mass parts) | 50 | 58 | 41 | 46 | 34 | 16 | 14 | 18 | 6 | 12 |
| | Glass (mass parts) | 50 | 42 | 59 | 54 | 66 | 84 | 86 | 82 | 94 | 88 |
| | MnO$_2$ (mass parts) | 1.5 | 1.5 | 1 | 0.8 | – | – | – | – | – | – |
| | TiO$_2$ (mass parts) | – | – | 0.5 | 0.3 | 0.8 | 0.2 | 0.2 | 0.2 | 0.1 | 0.2 |
| | CuO (mass parts) | 1 | 1 | 1 | 0.5 | – | – | 0.5 | 1 | 0.8 | 1 |
| | SiO$_2$ (mass parts) | – | – | – | – | – | – | 5 | 5 | – | 5 |
| Evaluation results | Fired film thickness (μm) | 7.5 | 8 | 7.8 | 8.2 | 6.8 | 7.7 | 8.1 | 8 | 7.5 | 8.1 |
| | Sheet resistance (Ω) | 41 | 48 | 102 | 93 | 1.06 K | 9.73 K | 97.9 K | 991 K | 10.4 M | 0.99 M |
| | CVR (%) | 1.9 | 2.2 | 2 | 2.3 | 2.4 | 2.5 | 2.3 | 3.1 | 3 | 3.3 |
| | C-TCR (ppm/°C) | –29 | –4 | –5 | –2 | –6 | –13 | –11 | –20 | –26 | –22 |
| | H-TCR (ppm/°C) | 27 | 12 | 15 | 17 | 8 | 3 | 12 | 4 | 3 | 6 |
| | Difference of H and C (ppm/°C) | 56 | 16 | 20 | 19 | 14 | 16 | 23 | 24 | 29 | 28 |
| | STOL (%) | 0.005 | 0.011 | 0.002 | 0.001 | –0.001 | –0.010 | –0.038 | –0.034 | –0.102 | –0.360 |
| | Noise (dB) | –41 | –40 | –38 | –36 | –19 | –19 | –10 | –5 | 5 | 0 |

[Comparative Examples 1 to 8]

A composition for a thick film resistor and a paste for a thick film resistor were produced in the same manner as in Examples 1 to 10, except that a ruthenium oxide powder, a glass powder, and additives presented in Table 4 were used, and amounts of the above components were as presented in Table 4. Moreover, a thick film resistor was produced and evaluated in the same manner as in Examples 1 to 10, except that the paste for the thick film resistor produced in each of Comparative Examples was used. The evaluation results are presented in Table 4.

[Table 4]

| | | Comp. Ex.1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|
| Composition | Ruthenium oxide powder type | H | I | J | K | L | M | N | O |
| | Glass powder type | a | a | a | b | b | c | c | c |
| | $RuO_2$ (mass parts) | 48 | 50 | 42 | 46 | 35 | 18 | 12 | 9 |
| | Glass (mass parts) | 52 | 50 | 58 | 54 | 65 | 82 | 88 | 91 |
| | $MnO_2$ (mass parts) | 1.2 | 1.3 | 0.9 | 0.6 | – | – | – | – |
| | $TiO_2$ (mass parts) | – | – | 0.5 | 0.3 | 0.6 | – | – | – |
| | CuO (mass parts) | 1 | 1 | 1 | 0.5 | – | 1 | 1 | 1 |
| | $SiO_2$ (mass parts) | – | – | – | – | – | 5 | 5 | 5 |
| Evaluation results | Fired film thickness ($\mu$m) | 8 | 8.1 | 7.8 | 7.7 | 8.2 | 7.7 | 8 | 8.1 |
| | Sheet resistance ($\Omega$) | 38 | 40 | 103 | 95 | 1.05 K | 1.01 M | 0.99 M | 9.70 M |
| | CVR (%) | 3.3 | 2.8 | 2.8 | 2.2 | 2.3 | 3.7 | 5.7 | 8.2 |
| | C-TCR (ppm/°C) | –89 | –60 | –52 | –62 | –52 | –253 | –269 | –28 |
| | H-TCR (ppm/°C) | 29 | 38 | 33 | 6 | 30 | –135 | –145 | –2 |
| | Difference of H and C (ppm/°C) | 118 | 98 | 85 | 68 | 82 | 118 | 124 | 26 |
| | STOL (%) | 0.013 | 0.005 | 0.003 | 0.002 | –0.012 | –0.612 | –1.032 | –1.56 |
| | Noise (dB) | –35 | –39 | –32 | –31 | –15 | 5 | 8 | >15 |

It was confirmed from the results presented in Tables 3 and 4 that the thick film resistors of Examples 1 to 10 had COLD-TCR and HOT-TCR, which were both close to 0, i.e., within ±30 ppm/°C, and had a small difference between H and C, i.e., 70 ppm/°C or less, thereby realizing a highly precise temperature coefficient of resistance.

Moreover, it was confirmed that the thick film resistors of Examples 1 to 10 had the change rate of the resistance value in the short term overload (STOL) test, which was within ±0.5%, had sufficiently small current noise, and had excellent characteristics.

Accordingly, it was confirmed that use of the ruthenium oxide powder having a rutile type crystal structure, Lc/La of 0.6913 or greater, and the crystallite size of 10 nm or greater and 80 nm or less could bring the cold temperature coefficient of resistance and the hot temperature coefficient of resistance close to 0 and reduce the difference between the cold temperature coefficient of resistance and the hot temperature coefficient of resistance.

Further, it was confirmed that the change rate in the resistance value in the short term overload (STOL) test was small, i.e., within $\pm 0.5\%$, because the crystallite size of the ruthenium oxide was 10 nm or greater and 80 nm or less.

Conversely, the thick film resistors of Comparative Examples 1 to 7 used the ruthenium oxide powder having Lc/La of less than 0.6913. Accordingly, it was confirmed that the thick film resistors obtained in the above Comparative Examples tended to have a large difference between the cold temperature coefficient of resistance and the hot temperature coefficient of resistance, and both could not fall within the range of $\pm 30$ ppm/°C. Further, it was confirmed that the temperature coefficient of resistance was significantly in minus in Comparative Examples 6 and 7 although $TiO_2$ and $MnO_2$, which would shift the temperature coefficient of resistance to the minus side, were not added.

In Comparative Example 8, moreover, Lc/La of the used ruthenium oxide powder was 0.69181, and COLD-TCR and HOT-TCR of the obtained thick film resistor were both within $\pm 30$ ppm/°C. It was however confirmed that the crystallite size of the used ruthenium oxide powder was large, i.e., 86.2 nm, the coefficient of variation rate (CVR) which represented the variation in the resistance value of the obtained thick film resistor was greater than 5%, and the change rate of the resistance value in the short term overload (STOL) test was greater than $\pm 0.5\%$.

It was confirmed from the above results of Examples and Comparative Examples that use of the ruthenium oxide powder having the predetermined properties could adjust the temperature coefficient of resistance to be within $\pm 30$ ppm/°C, which had been difficult to achieve in the related art, and could form a thick film resistor having a highly precise temperature coefficient of resistance.

This application claims priority under Japanese Patent Application No. 2022-119727 filed July 27, 2022, and the entire contents of Japanese Patent Application No. 2022-119727 are incorporated herein by reference.

**Claims**

1. A ruthenium oxide powder, having:

   a rutile type crystal structure;
   Lc/La of 0.6913 or greater, where La is a lattice constant of an a-axis and Lc is a lattice constant of a c-axis as measured by X-ray diffraction; and
   a crystallite size of 10 nm or greater and 80 nm or less.

2. A composition for a thick film resistor, the composition comprising:

   a ruthenium oxide powder; and
   a glass powder,
   wherein the ruthenium oxide powder has
   a rutile type crystal structure,
   Lc/La of 0.6913 or greater, where La is a lattice constant of an a-axis and Lc is a lattice constant of a c-axis as measured by X-ray diffraction, and
   a crystallite size of 10 nm or greater and 80 nm or less.

3. The composition for the thick film resistor according to claim 2,
   wherein, when a total mass of the ruthenium oxide powder and the glass powder is determined as 100%, a mass percentage of the ruthenium oxide powder is 5% or greater and 60% or less.

4. The composition for the thick film resistor according to claim 2 or 3,
   wherein a 50% volume cumulative particle size of the glass powder is 5 $\mu$m or less.

5. The composition for the thick film resistor according to claim 2 or 3,

   wherein the glass powder includes $SiO_2$, $B_2O_3$, and RO (R is one or more alkaline earth metals selected from the group consisting of Ca, Sr, and Ba), and
   when a total mass of $SiO_2$, $B_2O_3$, and RO is determined as 100 parts by mass, $SiO_2$ is included in an amount of 20 parts by mass or greater and 50 parts by mass or less, $B_2O_3$ is included in an amount of 10 parts by mass or greater and 30 parts by mass or less, and RO is included in an amount of 35 parts by mass or greater and 65 parts by mass or less.

6. A paste for a thick film resistor, the paste comprising:

a ruthenium oxide powder;
a glass powder; and
an organic vehicle,
wherein the ruthenium oxide powder has
a rutile type crystal structure,
Lc/La of 0.6913 or greater, where La is a lattice constant of an a-axis and Lc is a lattice constant of a c-axis as measured by X-ray diffraction, and
a crystallite size of 10 nm or greater and 80 nm or less.

7. The paste for the thick film resistor according to claim 6,
wherein, when a total mass of the ruthenium oxide powder and the glass powder is determined as 100%, a mass percentage of the ruthenium oxide powder is 5% or greater and 60% or less.

8. The paste for the thick film resistor according to claim 6 or 7,

wherein the glass powder includes $SiO_2$, $B_2O_3$, and RO (R is one or more alkaline earth metals selected from the group consisting of Ca, Sr, and Ba), and
when a total mass of $SiO_2$, $B_2O_3$, and RO is determined as 100 parts by mass, $SiO_2$ is included in an amount of 20 parts by mass or greater and 50 parts by mass or less, $B_2O_3$ is included in an amount of 10 parts by mass or greater and 30 parts by mass or less, and RO is included in an amount of 35 parts by mass or greater and 65 parts by mass or less.

9. A thick film resistor formed of the composition for the thick film resistor of claim 2 or 3.

10. The thick film resistor according to claim 9,

wherein the glass powder includes $SiO_2$, $B_2O_3$, and RO (R is one or more alkaline earth metals selected from the group consisting of Ca, Sr, and Ba), and
when a total mass of $SiO_2$, $B_2O_3$, and RO is determined as 100 parts by mass, $SiO_2$ is included in an amount of 20 parts by mass or greater and 50 parts by mass or less, $B_2O_3$ is included in an amount of 10 parts by mass or greater and 30 parts by mass or less, and RO is included in an amount of 35 parts by mass or greater and 65 parts by mass or less.

# FIG.1

## INTERNATIONAL SEARCH REPORT

International application No.

**PCT/JP2023/027071**

| A. CLASSIFICATION OF SUBJECT MATTER |
|---|
| *H01C 7/00*(2006.01)i; *C01G 55/00*(2006.01)i; *C03C 8/16*(2006.01)i; *C03C 14/00*(2006.01)i<br>FI:  H01C7/00 324; C01G55/00; C03C8/16; C03C14/00 |
| According to International Patent Classification (IPC) or to both national classification and IPC |

| B. FIELDS SEARCHED |
|---|
| Minimum documentation searched (classification system followed by classification symbols)<br>    H01C7/00; C01G55/00; C03C8/16; C03C14/00 |
| Documentation searched other than minimum documentation to the extent that such documents are included in the fields searched<br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023 |
| Electronic data base consulted during the international search (name of data base and, where practicable, search terms used) |

| C. DOCUMENTS CONSIDERED TO BE RELEVANT |
|---|

| Category* | Citation of document, with indication, where appropriate, of the relevant passages | Relevant to claim No. |
|---|---|---|
| Y | JP 2021-125303 A (SUMITOMO METAL MINING CO) 30 August 2021 (2021-08-30)<br>    paragraphs [0019]-[0079] | 1-10 |
| Y | JP 2018-165238 A (SUMITOMO METAL MINING CO) 25 October 2018 (2018-10-25)<br>    paragraphs [0032]-[0034] | 1-10 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 October 2023** | **24 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/027071**

| Patent document cited in search report | Publication date (day/month/year) | Patent family member(s) | Publication date (day/month/year) |
|---|---|---|---|
| JP 2021-125303 A | 30 August 2021 | (Family: none) | |
| JP 2018-165238 A | 25 October 2018 | US 2020/0365299 A1 paragraphs [0034]-[0036] CN 110461771 A KR 10-2019-0132394 A | |

**REFERENCES CITED IN THE DESCRIPTION**

**Patent documents cited in the description**

- JP 2005129806 A
- JP 2005209742 A
- JP 2022119727 A